# EUROPEAN PATENT SPECIFICATION

(11) **EP 4 098 538 B1**
(45) Date of publication and mention of the grant of the patent: **11.06.2025**
(21) Application number: 20916575.2
(22) Date of filing: 09.03.2020
(51) Int. Cl.: B63B 21/50, B63B 21/29

(54) **MOORING DEVICE**
VERTÄUUNGSVORRICHTUNG
DISPOSITIF D'AMARRAGE

(30) Priority: 29.01.2020 KR 20200010492
(43) Date of publication of application: 07.12.2022
(73) Proprietor: Kepco Engineering & Construction Company, Inc., Gimcheon-si Gyeongsangbuk-do 39660 (KR)
(72) Inventor: YOUN, Young Jong, Yongin-si, Gyeonggi-do 16916 (KR); KIM, Jong Kill, Yongin-si, Gyeonggi-do 16802 (KR); KIM, Joo Young, Goyang-si, Gyeonggi-do 10361 (KR); JEON, Chul Kyoo, Gimcheon-si, Gyeongsangbuk-do 39660 (KR)
(74) Representative: J A Kemp LLP
(86) International application number: PCT/KR2020/003279
(87) International publication number: WO 2021/153845

(56) References cited:
- FR-A1- 2 669 295
- GB-A- 2 500 322
- JP-U- H 074 288
- KR-A- 20140 136 511
- KR-A- 20190 079 234
- KR-B1- 100 976 615
- KR-B1- 100 976 615
- KR-B1- 101 292 236
- KR-Y1- 200 249 015
- KR-Y1- 200 249 015

## Description

### TECHNICAL FIELD

The present disclosure relates to a mooring device, and more particularly, to a mooring device used to moor a floating offshore wind power generator and capable of minimizing the length of a connecting member required for mooring in deep water and minimizing an installation area as well as firmly and stably mooring a floating body.

### BACKGROUND ART

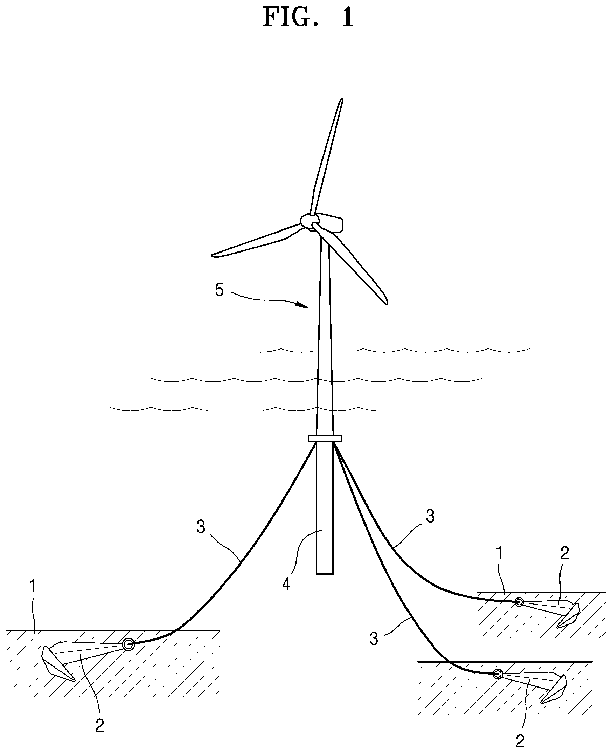

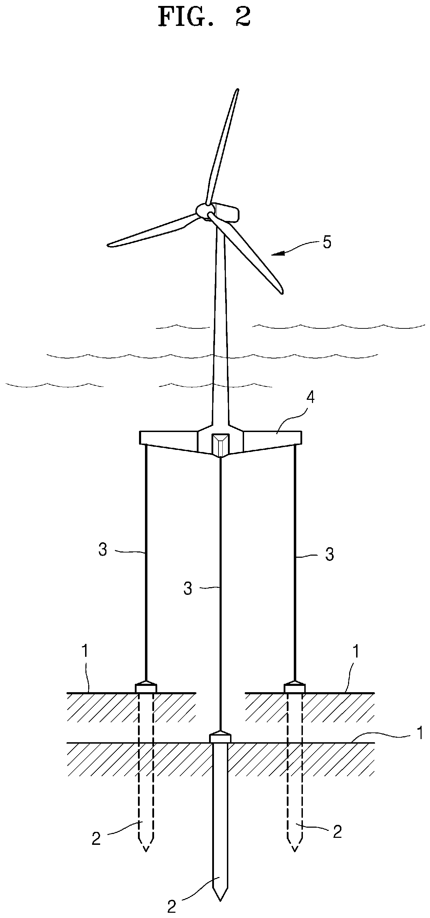

As illustrated in FIGS. 1 and 2, two types of methods have been used to fix a floating body in a floating offshore wind power generators according to the related art.

As shown in FIG. 1, one of the two types is a catenary type according to which a plurality of anchors 2 are drawn in various directions and deeply inserted into a seabed 1, and each of the anchors 2 is diagonally connected to a floating body 4 (a floating body of so-called spar type or semi-submersible type) by using a mooring chain 3 (or a mooring rope). Furthermore, as illustrated in FIG. 2, the other one type is a taut type according to which the anchor 2 is fixed to the seabed 1 and by extending the mooring chain 3 (or a mooring rope) in a direction perpendicular to the anchor 2 to maintain tension, a floating body (so-called tension lag platform (TLP) type) is moored.

In the case of the catenary type, as a length of a mooring line increases significantly in deep water, economic efficiency may be deteriorated, and as the mooring line is arranged to extend diagonally, an installation area for a floating offshore wind power generator may increase.

As for the taut type, as a mooring line is connected vertically, economic efficiency in materials costs may be excellent; however, when the bearing capacity of the anchor is diminished, the stability of the floating body may be affected, and there is also a possibility of overturning of the floating offshore wind power generator. Moreover, a separate fixing device needs to be added to improve the bearing capacity of the anchor, which may lead to complicated installation of the mooring device and increased costs.

KR 100,976,615, FR 2,669,295, KR 101,292,236 and GB 2,500,322 disclose background art.

### DESCRIPTION OF EMBODIMENTS

### TECHNICAL PROBLEM

The present disclosure pertaining to a mooring device used to moor a floating offshore wind power generator is devised to resolve the foregoing issues and aims to provide a mooring device capable of minimizing the length of a connecting member required for mooring in deep water and minimizing an installation area as well as firmly and stably mooring a floating body.

### SOLUTION TO PROBLEM

The invention is defined in the independent claim. Any aspects, embodiments and examples of the present disclosure which do not fall under the scope of the appended claims do not form part of the invention and are merely provided for illustrative purposes.

According to an embodiment of the present disclosure, a mooring device includes: a weight structure which sinks by gravity to be seated on a seabed; an anchor portion which is settled on the seabed to anchor a floating body; and a connecting member which includes one end portion connected to the floating body and the other end portion connected to the anchor portion, and has an extension direction that is changed by passing through a direction changing portion provided in the weight structure. The direction changing portion includes: a rotating portion arranged to be rotatable around a rotation shaft provided in the weight structure; a holding portion provided at one end portion of the rotating portion and configured to hold inward and extend the connecting member; and a fixer provided at the other end portion of the rotating portion and fixed in the seabed when the rotating portion is rotated by tension of the connecting member.

### ADVANTAGEOUS EFFECTS OF DISCLOSURE

In a mooring device according to the present disclosure, as a connecting member is connected and extends in the vertical direction from a weight structure to a floating body (e.g., a floating body for a floating offshore wind power generator) by a direction changing portion provided at the weight structure and extends and is anchored in a direction adjoining the seabed from the weight structure to an anchor portion, the technical stability and economic efficiency may be improved remarkably.

That is, even in the deep water, the connecting member required for mooring may be minimized, and as the connecting member is connected vertically from the floating body to the weight structure, an area required for installation of the floating offshore wind power generator may be minimized as well.

Furthermore, as the connecting member extends in the horizontal direction adjoining the seabed from the weight structure to the anchor portion, the grip force by the anchor portion may be secured sufficiently, which lead to the effect of firmly and stably mooring the floating body.

### BRIEF DESCRIPTION OF DRAWINGS

FIGS. 1 and 2 are schematic diagrams of a mooring device of a floating offshore wind power generator according to the related art.
FIG. 3 is a diagram of a mooring device according to an embodiment of the present disclosure.
FIG. 4 is a top view of FIG. 3.
FIG. 5 is a front view of a mooring device according to another embodiment of the present disclosure.
FIG. 6 is a top view of FIG. 5.
FIGS. 7 to 9 are diagrams illustrating an embodiment in which a fixing portion is coupled to a weight structure.
FIG. 10 is a diagram illustrating an embodiment in which a different type of direction changing portion is applied.
FIG. 11 is a diagram illustrating an embodiment in which another type of weight structure is applied.
FIGS. 12 to 15 are diagrams illustrating modification examples of a shape of a weight structure.

### MODE OF DISCLOSURE

Hereinafter, embodiments of the present disclosure are described in detail with reference to the accompanying drawings.

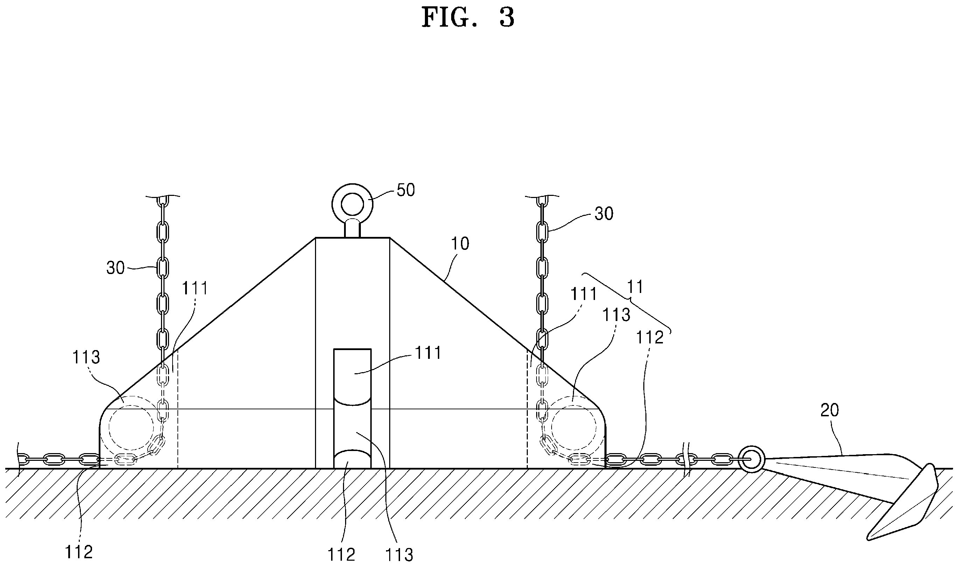

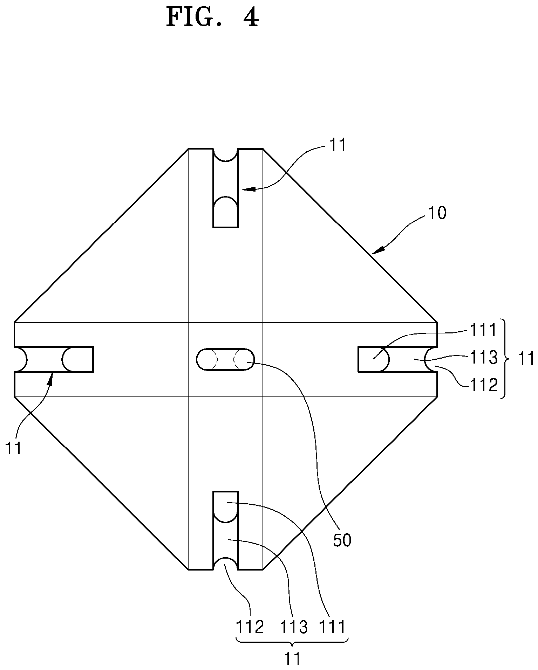

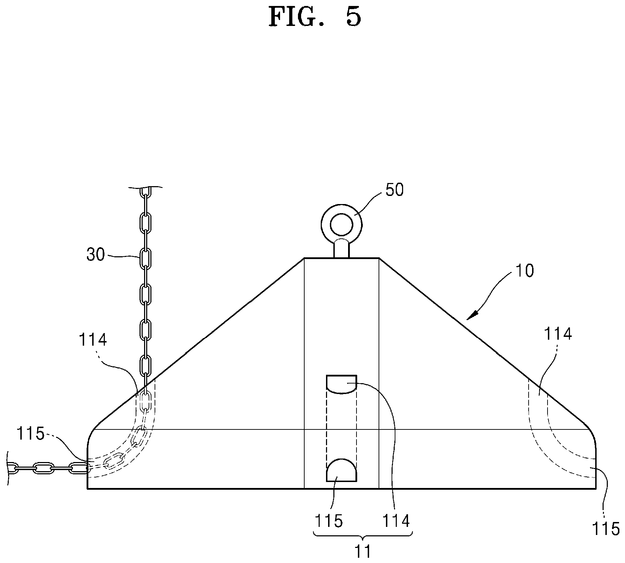

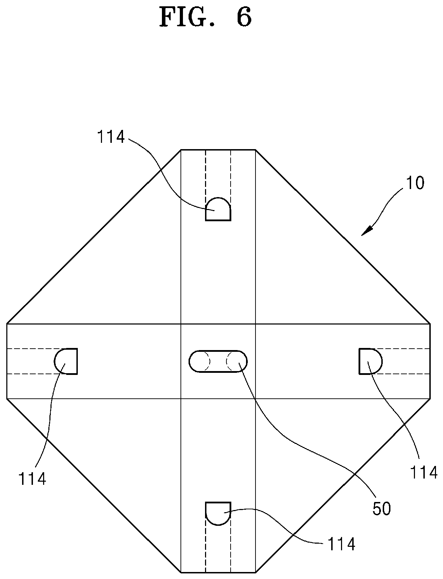

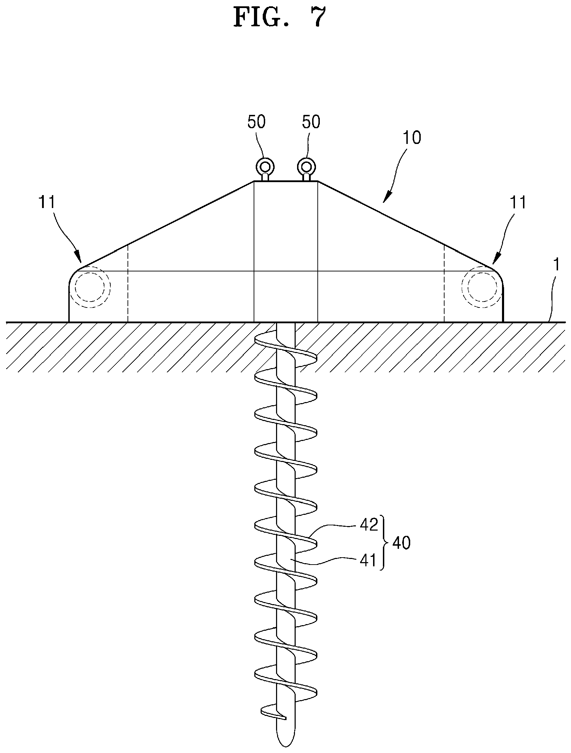

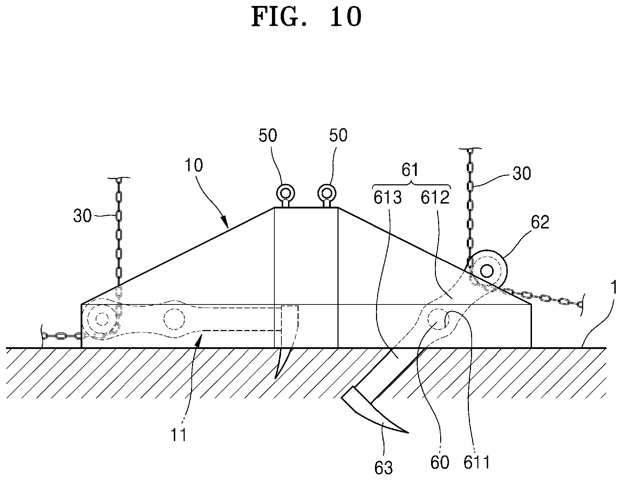

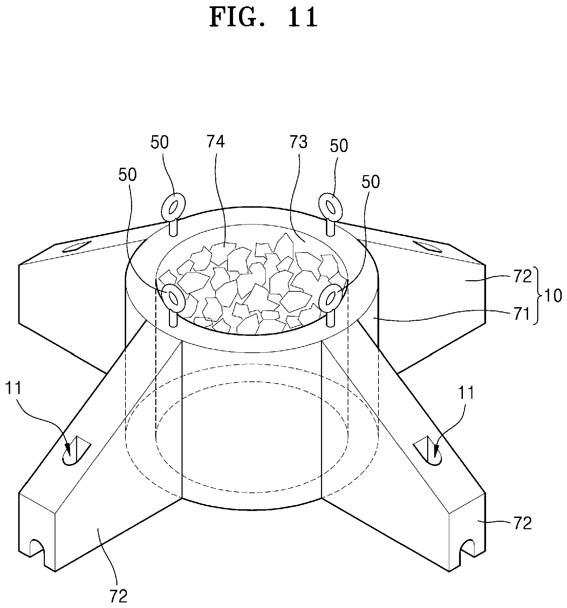

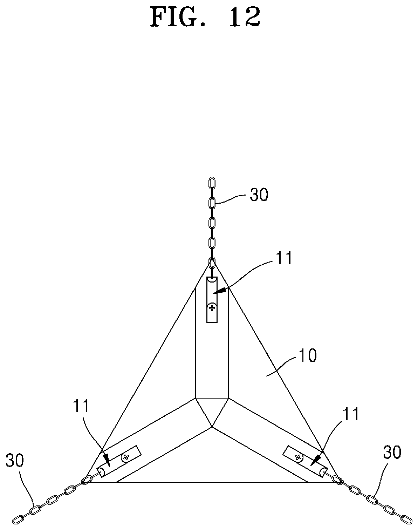

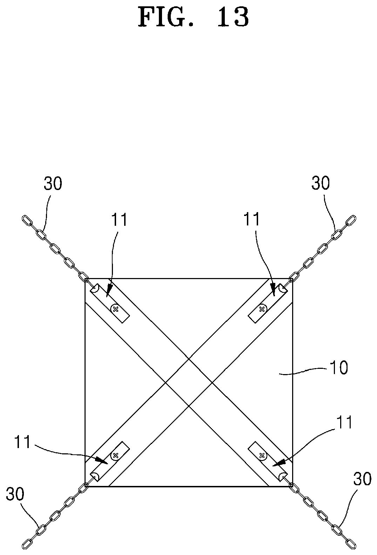

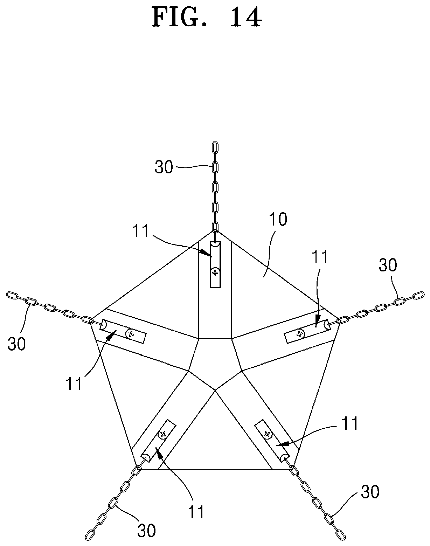

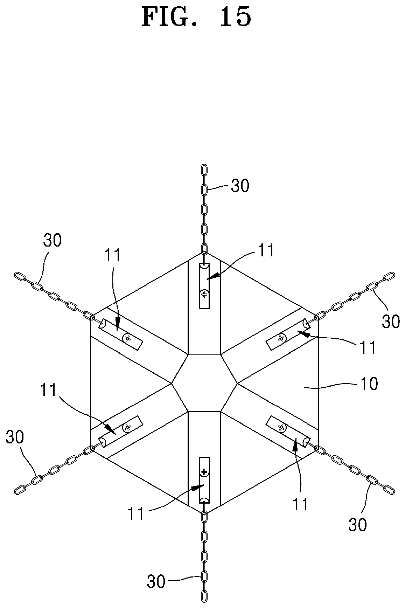

FIG. 3 is a diagram of a mooring device according to an embodiment of the present disclosure, and FIG. 4 is a plan view of FIG. 3. FIG. 5 is a front view of a mooring device according to another embodiment of the present disclosure, and FIG. 6 is a plan view of FIG. 5. FIGS. 7 to 9 are diagrams illustrating an embodiment in which a fixing portion is coupled to a weight structure. FIG. 10 is a diagram illustrating an embodiment in which a different type of direction changing portion is applied, and FIG. 11 is a diagram illustrating an embodiment in which another type of weight structure is applied. FIGS. 12 to 15 are diagrams illustrating modification examples of a shape of a weight structure.

A mooring device 100 according to the present disclosure relates to a device configured to moor a floating body which floats on a water surface. The mooring device 100 of the present disclosure may be used to fix a floating offshore wind power generator which floats on a water surface.

As illustrated in FIG. 3, the mooring device 100 according to an embodiment of the present disclosure may include a weight structure 10, an anchor portion 20, and a connecting member 30.

The weight structure 10 may sink by gravity and be seated on a seabed. The weight structure 10 may have a weight sufficient to fix a floating body such as a floating offshore wind power generator. The weight structure 10 may be made of reinforced concrete or steel concrete. However, the material of the weight structure 10 is not limited to the foregoing, and the weight structure 10 may include various materials. A lug 50 for refloat and installation may be formed on the weight structure 10.

According to the embodiment, the weight structure 10 may include a direction changing portion 11 configured to change an extension direction of the connecting member 30. The direction changing portion 11 may be arranged in such a manner that a part of the connecting member 30 extending upwards from the direction changing portion 11 is arranged downwards vertically from the floating body, and a part of the connecting member 30 directed towards the seabed by the direction changing portion 11 extends in the horizontal direction.

The anchor portion 20 may be arranged to be settled on the seabed and anchor the floating body. According to the embodiment, a plurality of anchor portions 20 may be provided to be settled on the seabed and moor the floating body, together with the weight structure 10.

The connecting member 30 may be component connecting the anchor portion 20 to the floating body. A chain, a wire rope, etc., which are commonly employed in a mooring device, may be used as the connecting member 30. One end portion of the connecting member 30 may be connected to the floating body, and the other end portion may be connected to the anchor portion 20. The extension direction of the connecting member 30 may be changed when the connecting member 30 passes through the direction changing portion 11 provided at the weight structure 10.

According to the embodiment, the weight structure 10 may have a structure of a regular polygon. The direction changing portion 11 may change the extension direction of the connecting member 30 to a direction towards each vertex of the regular polygon from the center of the regular polygon. That is, the extension direction of the connecting member 30 extending downwards vertically may be changed to a direction towards a lateral side of the weight structure 10 by the direction changing portion 11. When the seabed is horizontal, the direction changing portion 11 may change the extension direction of the connecting member 30 to the horizontal direction.

According to the embodiment, as illustrated in FIG. 4, the weight structure 10 may be formed in a shape of a square, and the connecting member 30 may proceed in a direction of an arrow by the direction changing portion 11. However, as illustrated in FIGS. 12 to 15, the shape of the weight structure 10 may be modified to a triangle, a quadrangle, a pentagon, a hexagon, etc.

A plurality of direction changing portions 11 may be provided at the weight structure 10, and each of connecting members 30 may be provided to pass through each direction changing portion 11. According to an embodiment of the present disclosure, the direction changing portion 11 may include a first opening 111, a second opening 112, and a wheel portion 113.

The first opening 111 may be a part opened in an upward direction, and the connecting member 30 may extend upwards vertically through the first opening 111.

The second opening 112 may be a part opened in a lateral direction, and the connecting member 30 may extend horizontally in the lateral direction through the second opening 112.

The wheel portion 113 may be arranged between the first opening 111 and the second opening 112 and configured to change the extension direction of the connecting member 30. The wheel portion 113 may be in contact with the connecting member 30. That is, the direction of the connecting member 30 may be turned and changed at the wheel portion 113.

Hereinafter, the actions and effects according to the configuration of the mooring device 100 are described in detail.

In the mooring device 100 according to the present disclosure, the extension direction of the connecting member 30 may be changed by the direction changing portion 11 of the weight structure 10. The connecting member 30 may extend downwards vertically from the floating body to the weight structure 10.

The connecting member 30 may extend horizontally from the weight structure 10 to the anchor portion 20. Such structure may implement both of the catenary type mooring method and the taut type mooring method simultaneously and thus be able to provide advantages of both types of the mooring method.

More specifically, the catenary type is a type according to which a mooring chain (or a mooring rope) is arranged diagonally from a floating body to a seabed to moor the floating body. As the chain extends diagonally in the catenary type, a length of the chain or a rope required for mooring may increase in the deep water. Accordingly, not only the expense for such chain or rope increases, but also an occupied or used area of a floating offshore wind power generator may also increase, and fishery activities by fishing vessels may be directly disturbed.

Meanwhile, the taut type is a type according to which a mooring chain (or a mooring rope) is arranged vertically from the floating body to the seabed to moor the floating body. As the chain extends vertically, an area occupied by the floating wind power generator may be reduced, and the fishery activities may not be hindered as much. However, the chain should be fixed securely to the seabed vertically, and strong tensile force needs to be maintained, which may be technically challenging.

According to the present disclosure, the connecting member 30 may be arranged vertically from the floating body to the direction changing portion 11 by the weight structure 10 which sinks to the seabed by gravity. Accordingly, the present disclosure may provide the advantage of the taut type mooring method. That is, as the connecting member 30 is arranged vertically, the cost necessary for the expensive connecting member 30 may be saved, and an occupied or used area of a public water surface required for a floating offshore wind power generator may be reduced. Moreover, the fishery activities of fishing vessels may not be overly disturbed.

Furthermore, according to the present disclosure, the connecting member 30 may extend adjoining the seabed from the direction changing portion 11 to the anchor portion 20. As the connecting member 30 extends adjoining the seabed, and the anchor portion 20 is coupled to an end portion of the connecting member 30, the tensile force at an anchor point may work horizontally instead of vertically or diagonally. Accordingly, the stability of the mooring device 100 may be enhanced by increasing the fixation force.

As such, as the connecting member 30 extends adjoining the seabed, and one end of portion of the connecting member 30 is coupled to the anchor portion 20, sufficient fixation force may be secured in the deep water. The present disclosure may provide the effect of convenient construction or installation without employing a separate complex fixing device for improving the fixation force as in the taut type mooring method. That is, the mooring device 100 according to the present disclosure may resolve the technical issue concerning a fixing device used to fix a mooring device when a floating offshore wind power generator of tension leg platform (TLP) type, which requires vertical tensile force, is deployed.

FIGS. 5 to 11 are diagrams of the mooring device 100 according to another embodiment of the present disclosure. In the embodiment of FIGS. 5 to 11, components acting or functioning the same as in FIG. 3 are denoted by the same reference numerals as in FIG. 3, and any redundant description thereon is omitted.

With reference to FIGS. 5 and 6, the mooring device 100 according to the embodiment may have a different direction changing portion, compared to the embodiment of FIG. 3. The rest of the components are substantially identical to the components of FIG. 3. The direction changing portion 11 according to the embodiment may be formed in a tubular shape of which an inlet portion 114 opened in an upward direction and an outlet portion 115 opened in a lateral direction are connected to each other so that connecting member 30 passes through the direction changing portion 11. An inside of the tubular shape has a gentle curved surface so that the connecting member 30 may come out therethrough. The lug 50 for refloat and installation may be formed on the weight structure 10.

The extension direction of the connecting member 30 may be changed when the connecting member 30 passes through the direction changing portion 11 having the tubular shape. The feature of extending vertically from the inlet portion 114 to the floating body and extending in a direction adjoining the seabed from the outlet portion 115 to the anchor portion 20 is the same in both direction changing portions. The actions and effects according to the embodiment are substantially identical to those of the embodiment according to FIG. 3.

In the embodiment according to FIGS. 7 to 9, a fixing portion 40 may be further provided to fix the weight structure 10 onto the seabed. The fixing portion 40 may protrude from a bottom surface of the weight structure 10 to be inserted into and fixed onto the seabed.

According to the embodiment of FIG. 7, the fixing portion 40 may include an insert portion 41 and a screw portion 42.

The insert portion 41 may protrude from the bottom surface of the weight structure 10 to be inserted into the seabed. The screw portion 42 may be a spiral wing coupled to an outer circumferential surface of the insert portion 41 and be provided to facilitate the insertion of the fixing portion 40 into the seabed and to prevent the fixing portion 40 from being easily detached from the seabed. Accordingly, the fixing portion 40 having a shape of a screw may provide the effect of sufficiently improving the grip power while enduring the tensile force due to the buoyant force caused by the floating body.

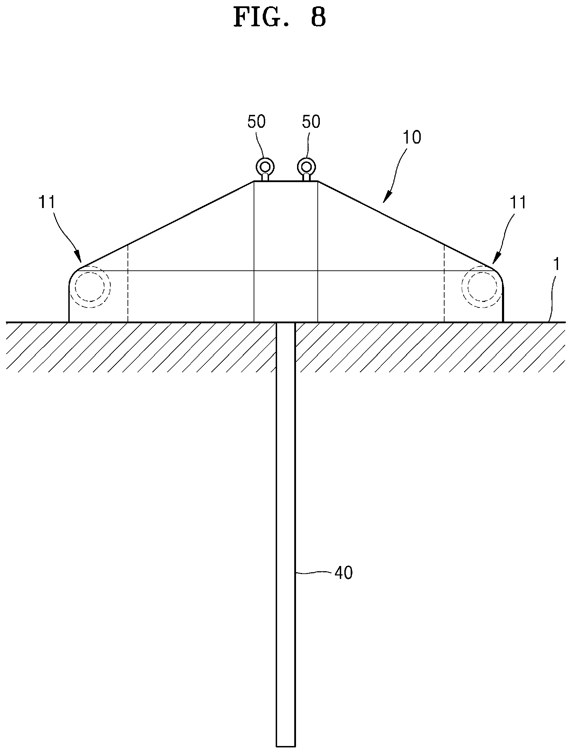

Moreover, as illustrated in FIG. 8, the fixing portion 40 may be formed in a pile type. Similar to the screw type, the pile type may also endure the strong tensile force formed by the buoyant force of the floating body and improve the grip force.

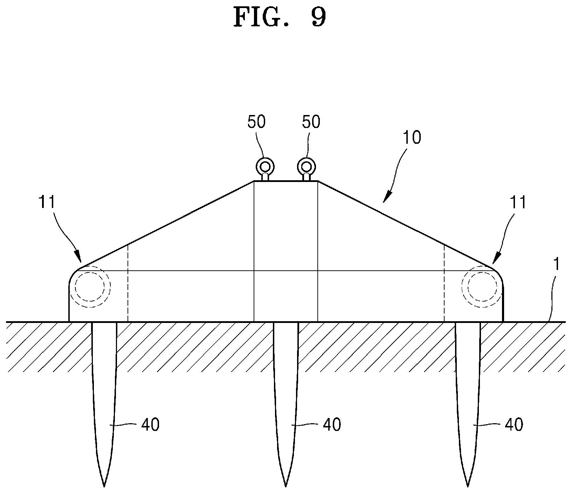

As illustrated in FIG. 9, a plurality of fixing portions 40 may be provided on the edge bottom surface of the weight structure 10. The fixing portion 40 formed in a corn shape at the edge of the weight structure 10 may improve the grip force of the weight structure 10 in the vertical direction and endure the tensile force when the connecting member 30 extends in a direction adjoining the seabed from the lateral side of the weight structure 10.

FIG. 10 illustrates an embodiment in which the direction changing portion 11 is configured differently, compared to FIG. 3. As illustrated in FIG. 10, the direction changing portion 11 applied to the embodiment may include a rotating portion 61, a holding portion 62, and a fixer 63.

The rotating portion is provided to be rotatable around a rotation shaft 60 provided in the weight structure 10. The rotating portion 61 may include a shaft hole 611 into which the rotation shaft 60 is inserted, a first rotation bar 612 and a second rotation bar 613 which extend from the shaft hole 611 in an opposite direction from each other.

The holding portion 62 is provided at one end portion of the rotating portion 61 to hold inward and extend the connecting member 30. According to the embodiment, the holding portion 62 may be provided at an end portion of the first rotation bar 612. The connecting member 30 extending from the holding portion 62 towards the floating body may extend in the vertical direction. The extension direction of the connecting member 30 extending from the holding portion 62 towards the seabed may be changed from the vertical direction to be directed towards the seabed.

The fixer 63 is provided at the other end portion of the rotating portion 61 and is fixed in the seabed when the rotating portion 61 is rotated by the tension of the connecting member 30. According to the embodiment, the fixer 63 may be coupled to one end of the second rotation bar 613 and be formed in a shape of a hook, and the second rotation bar 613 may burrow into the seabed and fix the weight structure 10 onto the seabed. The fixing portion 40 of rotating type may fix the weight structure 10 in the vertical direction and facilitate the bearing of the tensile force caused by the connecting member 30 pulled by the anchor portion 20 in the lateral direction.

FIG. 11 illustrates an embodiment in which the weight structure 10 is configured differently, compared to FIG. 3. As illustrated in FIG. 11, the weight structure 10 applied to the embodiment may include a body portion 71 and a setting portion 72.

A space portion 73 filled with an auxiliary weight may be formed at a center portion of the body portion 71. As illustrated in FIG. 11, the body portion 71 may be formed in a cylindrical shape including a space therein. The shape of the body portion 71 is not limited to the cylindrical shape, and the body portion 71 may have any other shapes as long as it includes the space portion 73. The space portion 73 may be filled with rocks or a concrete weight 74. To increase the grip force between the body portion 71 and the seabed, the fixing portion 40 may be applied to the seabed. The lugs 50 for installation and refloat may be arranged apart from each other on an upper surface of the body portion 71.

The setting portion 72 may be radially coupled to an outer circumferential surface of the body portion 71 and may be seated on the seabed. A contact area between the body portion 71 and the seabed may be increased by the setting portion 72. According to the embodiment, the direction changing portion 11 may be formed at the setting portion 72. The configuration of the direction changing portion 11 may employ one of the forms applied to the embodiments.

While the present disclosure has been particularly described with reference to the embodiments thereof, various changes in form and details may be made therein without departing from the scope of embodiments as defined by the appended claim.

## Claims

1. A mooring device comprising:
a weight structure (10) which sinks by gravity to be seated on a seabed;
an anchor portion (20) which is settled on the seabed to anchor a floating body; and
a connecting member (30) which includes one end portion connected to the floating body and the other end portion connected to the anchor portion (20), the connecting member (30) having an extension direction that is changed by passing through a direction changing portion (11) provided in the weight structure (10),
**characterized in that** the direction changing portion comprises:
a rotating portion (61) arranged to be rotatable around a rotation shaft (60) provided in the weight structure;
a holding portion (62) provided at one end portion of the rotating portion (61) and configured to hold inward the connecting member (30), allowing the connecting member to extend; and
a fixer (63) provided at the other end portion of the rotating portion (61), and fixed in the seabed when the rotating portion (61) is rotated by tension of the connecting member (30).

## Patentansprüche

1. Vertäuungsvorrichtung, umfassend:
eine Gewichtsstruktur (10), die durch die Schwerkraft sinkt, um auf einem Meeresboden zu liegen;
einen Ankerabschnitt (20), der auf dem Meeresboden aufgesetzt wird, um einen Schwimmkörper zu verankern; und
ein Verbindungselement (30), das einen Endabschnitt, der mit dem Schwimmkörper verbunden ist, und den anderen Endabschnitt beinhaltet, der mit dem Ankerabschnitt (20) verbunden ist, wobei das Verbindungselement (30) eine Ausdehnungsrichtung aufweist, die durch Passieren eines Richtungsänderungsabschnitts (11) geändert wird, der in der Gewichtsstruktur (10) bereitgestellt ist,
**dadurch gekennzeichnet, dass** der Richtungsänderungsabschnitt umfasst:
einen sich drehenden Abschnitt (61), der angeordnet ist, um um eine Drehwelle (60) drehbar zu sein, die in der Gewichtsstruktur bereitgestellt ist;
einen Halteabschnitt (62), der an einem Endabschnitt des sich drehenden Abschnitts (61) bereitgestellt ist und dazu konfiguriert ist, das Verbindungselement (30) nach innen zu halten, sodass sich das Verbindungselement ausdehnt; und
einen Fixierer (63), der an dem anderen Endabschnitt des sich drehenden Abschnitts (61) bereitgestellt und in dem Meeresboden fixiert ist, wenn der sich drehende Abschnitt (61) durch die Spannung des Verbindungselements (30) gedreht wird.

## Revendications

1. Dispositif d'amarrage comprenant :
une structure de poids (10) qui s'enfonce par gravité pour se poser sur un fond marin,
une portion d'ancrage (20) qui repose sur le fond marin pour ancrer un corps flottant, et
un élément de raccordement (30) dont une portion d'extrémité est raccordée au corps flottant et l'autre portion d'extrémité est raccordée à la portion d'ancrage (20), l'élément de raccordement (30) ayant une direction d'étendue qui est modifiée par passage à travers une portion de changement de direction (11) prévue dans la structure de poids (10) ;
**caractérisé en ce que** la portion de changement de direction comprend :
une portion de rotation (61) agencée de manière à pouvoir tourner sur un axe de rotation (60) prévu dans la structure de poids,
une portion de maintien (62) prévue au niveau d'une portion d'extrémité de la portion de rotation (61) et conçue pour maintenir vers l'intérieur l'élément de raccordement (30), permettant à l'élément de raccordement de s'étendre, et
un dispositif de fixation (63) prévu au niveau de l'autre portion d'extrémité de la portion de rotation (61), et qui se fixe dans le fond marin lorsque la portion de rotation (61) est mise en rotation sous l'effet de la tension de l'élément de raccordement (30).
